(19) Europäisches Patentamt
European Patent Office
Office européen des brevets

(11) EP 3 836 048 A1

(12) DEMANDE DE BREVET EUROPEEN

(43) Date de publication:
16.06.2021 Bulletin 2021/24

(51) Int Cl.:
G06Q 10/04 (2012.01)     G06Q 50/06 (2012.01)

(21) Numéro de dépôt: 20212498.8

(22) Date de dépôt: 08.12.2020

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
KH MA MD TN

(30) Priorité: 10.12.2019 FR 1914068

(71) Demandeur: TOTAL DIRECT ENERGIE
75015 Paris (FR)

(72) Inventeurs:
• FALLAS, Éric, René, André
  75015 PARIS (FR)
• CHETTIAR, Vincent
  78000 VERSAILLES (FR)
• GREGOIRE, Tony, Marcel, Jean
  75013 PARIS (FR)
• DUPERRY, Louis
  75017 PARIS (FR)
• JEANNEY, Remi, Sylvain, Dominique
  92130 ISSY LES MOULINEAUX (FR)

(74) Mandataire: Lavoix
2, place d'Estienne d'Orves
75441 Paris Cedex 09 (FR)

(54) **PROCÉDÉ ET DISPOSITIF ÉLECTRONIQUE DE GESTION DE L'AFFICHAGE D'INFORMATIONS RELATIVES À UN COMPTEUR ÉLECTRIQUE, PROGRAMME D'ORDINATEUR ET INSTALLATION ÉLECTRONIQUE DE TRANSMISSION ASSOCIÉS**

(57) Ce procédé de gestion de l'affichage d'informations relatives à un compteur électrique (12) connecté à un réseau électrique, est mis en œuvre par un dispositif électronique de gestion (20) et comprend les étapes suivantes :
- acquisition, de la part d'un gestionnaire du réseau électrique, de valeurs de consommation électrique et de production(s) électrique(s) sur le réseau électrique,
- calcul d'une grandeur marginale de dioxyde de carbone émis pour chaque instant temporel (t) d'un ensemble d'instant(s) temporel(s), chaque grandeur marginale étant calculée à partir des valeurs acquises de consommation et de production correspondant à l'instant temporel (t) respectif et d'une modélisation d'un taux d'émission de dioxyde de carbone associé à une dernière tranche de quantité d'électricité produite pour le réseau électrique, ladite dernière tranche résultant d'une production(s) électrique(s) émettrice de dioxyde de carbone et distincte d'une production nucléaire,
- génération de données d'affichage destinées à être affichées sur un écran d'affichage (26), les données d'affichage comportant chaque grandeur marginale calculée de dioxyde de carbone émis.

FIG.1

EP 3 836 048 A1

**Description**

La présente invention concerne un procédé de gestion de l'affichage d'informations relatives à un compteur électrique connecté à un réseau électrique, le procédé étant mis en œuvre par un dispositif électronique de gestion.

L'invention concerne également un programme d'ordinateur comportant des instructions logicielles qui, lorsqu'elles sont exécutées par un ordinateur, mettent en oeuvre un tel procédé de gestion de l'affichage.

L'invention concerne aussi un tel dispositif électronique de gestion de l'affichage et une installation électronique de transmission de données issues du compteur électrique comprenant un tel dispositif de gestion et un système de communication adapté pour être connecté au compteur électrique et pour transmettre à un utilisateur des données issues du compteur électrique.

L'invention concerne le domaine de la transmission de données, telles que des données de consommation électrique, issues d'un compteur électrique et de l'affichage d'informations relatives au compteur électrique. Cette transmission de données est effectuée par l'intermédiaire d'un système de communication adapté pour être connecté au compteur électrique via une interface de communication et pour transmettre à un utilisateur des données issues du compteur électrique.

Le système de communication est typiquement un système de communication ERL (pour Emetteur Radio Linky), le compteur électrique étant un compteur électrique Linky™ de la société ENEDIS équipé d'une interface TIC (pour Télé-Information Client) via laquelle sont issues les données aptes à être transmises par le système de communication.

On connaît du document FR 3 058 006 B1 un système de communication du type précité. Le système de communication est un système de communication ERL couplé à un compteur électrique Linky™ via une interface TIC. Le système de communication comprend un dispositif d'alimentation électrique pour alimenter un dispositif de communication apte à émettre des données, telles que des données de consommation électrique, issues du compteur électrique.

Ce système de communication est généralement piloté par un appareil électronique de pilotage.

Toutefois, les informations affichées, à destination de l'utilisateur, sur un tel appareil de pilotage sont assez sommaires, et ne permettent pas à l'utilisateur de gérer au mieux sa consommation électrique, c'est-à-dire la consommation électrique pour ledit compteur électrique, notamment s'il souhaite réduire l'impact environnemental de celle-ci.

Le but de l'invention est donc de proposer un procédé et un dispositif électronique de gestion de l'affichage d'informations relatives à un compteur électrique connecté à un réseau électrique fournissant davantage d'informations à l'utilisateur, afin d'aider davantage l'utilisateur à mieux gérer sa consommation électrique, notamment s'il souhaite réduire l'impact environnemental de celle-ci.

A cet effet, l'invention a pour objet un procédé de gestion de l'affichage d'informations relatives à un compteur électrique connecté à un réseau électrique, le procédé étant mis en oeuvre par un dispositif électronique de gestion et comprenant les étapes suivantes :

- acquisition, de la part d'un gestionnaire du réseau électrique, de valeurs de consommation électrique et de production(s) électrique(s) sur le réseau électrique,
- calcul d'une grandeur marginale de dioxyde de carbone émis pour chaque instant temporel d'un ensemble d'instant(s) temporel(s), chaque grandeur marginale étant calculée à partir des valeurs acquises de consommation et de production correspondant à l'instant temporel respectif et d'une modélisation d'un taux d'émission de dioxyde de carbone associé à une dernière tranche de quantité d'électricité produite pour le réseau électrique, ladite dernière tranche résultant d'une production(s) électrique(s) émettrice de dioxyde de carbone et distincte d'une production nucléaire, et
- génération de données d'affichage destinées à être affichées sur un écran d'affichage, les données d'affichage comportant chaque grandeur marginale calculée de dioxyde de carbone émis.

Ainsi, le procédé de gestion l'affichage selon l'invention permet de calculer une grandeur marginale de dioxyde de carbone émis pour un ou plusieurs instants temporels respectifs, chaque grandeur marginale étant calculée, d'une part, à partir des valeurs acquises de consommation et de production(s) électrique(s)s, et d'autre part, de la modélisation du taux d'émission de dioxyde de carbone associée à la dernière tranche de quantité d'électricité produite pour le réseau électrique. La ou les grandeurs marginales calculées sont alors destinées à être affichées sur l'écran d'affichage, afin que l'utilisateur puisse directement voir l'impact de sa consommation électrique en termes d'émission de dioxyde de carbone.

La modélisation d'émission du taux de dioxyde de carbone est basée sur la dernière tranche de quantité d'électricité produite sur le réseau électrique, cette dernière tranche étant par exemple une tranche de 5 GW. Le calcul de la grandeur marginale de dioxyde de carbone à partir de cette modélisation basée sur ladite dernière tranche de quantité d'électricité produite permet alors de mieux représenter l'impact, en termes d'émission de dioxyde de carbone, d'une variation de la consommation électrique pour le compteur électrique, c'est-à-dire de la part de l'utilisateur.

L'homme du métier comprendra alors que par « dernière tranche de quantité d'électricité produite », on entend la tranche de quantité d'électricité produite correspondant à un lancement de production d'électricité qui est effectué en dernier, afin de répondre à une demande complémentaire d'énergie électrique sur le réseau. La dernière tranche de quantité d'électricité produite correspond alors généralement à une électricité produite via une ou plusieurs centrales à gaz et/ou plusieurs centrales à fuel et/ou une ou plusieurs centrales à charbon. La dernière tranche de quantité d'électricité produite prise en compte pour ladite modélisation correspond alors à une production auxiliaire d'électricité sur le réseau, qui est à la fois émettrice de dioxyde de carbone et distincte d'une production nucléaire d'électricité sur le réseau. En effet, la production nucléaire d'électricité sur le réseau est considérée comme une production de base sur le réseau et correspond en d'autres termes à la première tranche d'électricité produite, étant donné notamment que le démarrage ou l'arrêt d'une centrale nucléaire est bien plus long que celui d'une centrale à gaz, d'une centrale à fuel ou encore d'une centrale à charbon.

L'homme du métier comprendra également que la production éolienne d'électricité et la production photovoltaïque d'électricité sur le réseau ne sont pas prises en compte dans ladite production auxiliaire d'électricité correspondant à la dernière tranche d'électricité produite sur le réseau, étant donné que lesdites productions éolienne et photovoltaïque sont considérées comme non-émettrices de dioxyde de carbone. En outre, lesdites productions éolienne et photovoltaïque sont, du fait de leur caractère intermittent, prises en compte en priorité dans la production d'électricité sur le réseau, et ne correspondent alors, pour cette raison supplémentaire, pas à la dernière tranche d'électricité produite sur le réseau.

La grandeur marginale de dioxyde de carbone calculée est, par exemple, un taux marginal de dioxyde de carbone émis, et représente alors un ratio d'une quantité de dioxyde de carbone émis par rapport à une consommation électrique, par exemple exprimé en g/kWh. En variante, la grandeur marginale calculée est une quantité marginale de dioxyde de carbone émis, et est alors calculée en fonction en outre d'une consommation électrique pour le compteur électrique en un instant temporel correspondant.

L'homme du métier comprendra aussi que ladite grandeur calculée est dite marginale, car elle est calculée seulement en fonction de ladite dernière tranche de quantité d'électricité produite sur le réseau électrique, et pas en fonction de la totalité de la quantité d'électricité produite sur le réseau électrique. Ceci permet alors de mieux quantifier l'influence de la consommation électrique associée au compteur électrique en termes d'émission de dioxyde de carbone.

Le calcul de la grandeur marginale de dioxyde de carbone permet donc de mettre en valeur l'impact que peut avoir l'utilisateur sur l'émission de dioxyde de carbone sur le territoire associé au réseau électrique, par exemple sur un territoire national, tel que la France, et le procédé de gestion selon l'invention permet alors de quantifier en temps réel l'émission marginale de dioxyde de carbone résultant de chaque kWh consommé par l'utilisateur.

Suivant d'autres aspects avantageux de l'invention, le procédé de gestion de l'affichage comprend une ou plusieurs des caractéristiques suivantes, prises isolément ou suivant toutes les combinaisons techniquement possibles :

- la grandeur marginale calculée est un taux marginal de dioxyde de carbone émis, représentant un ratio d'une quantité de dioxyde de carbone émis par rapport à une consommation électrique ;
  le taux marginal de dioxyde de carbone émis étant de préférence exprimé en g/kWh ;
- le taux marginal de dioxyde de carbone émis vérifie l'équation suivante :

$$R_{CO2\_marg}(t) = R_{CO2\_mod}(Prod_{aux}(t))$$

où $R_{CO2\_marg}(t)$ représente le taux marginal de dioxyde de carbone émis en l'instant temporel respectif, $Prod_{aux}(t)$ représente une production auxiliaire d'électricité sur le réseau en l'instant temporel respectif, ladite production auxiliaire étant émettrice de dioxyde de carbone et distincte d'une production nucléaire d'électricité sur le réseau, et
$R_{CO2\_mod}$ est une fonction résultant de la modélisation du taux d'émission de dioxyde de carbone associé à la dernière tranche de quantité d'électricité produite, cette fonction dépendant de ladite production auxiliaire ;
ladite production auxiliaire étant de préférence déterminée à partir des valeurs acquises de consommation et de production correspondant à l'instant temporel respectif ;

- la grandeur marginale calculée est une quantité marginale de dioxyde de carbone émis, et
  le procédé comprend en outre l'acquisition d'une valeur de consommation électrique pour le compteur électrique en l'instant temporel respectif ;
  la valeur de consommation électrique étant de préférence acquise de la part d'un système de communication connecté au compteur électrique ;
- la quantité marginale de dioxyde de carbone émis vérifie l'équation suivante :

$$Q_{CO2\_marg}(t) = R_{CO2\_mod}(Prod_{aux}(t)) \cdot C(t)$$

où $Q_{CO2\_marg}(t)$ représente la quantité marginale de dioxyde de carbone émis en l'instant temporel respectif, $Prod_{aux}(t)$ représente une production auxiliaire d'électricité sur le réseau en l'instant temporel respectif, ladite production auxiliaire étant émettrice de dioxyde de carbone et distincte d'une production nucléaire d'électricité sur le réseau,

$R_{CO2\_mod}$ est une fonction résultant de la modélisation du taux d'émission de dioxyde de carbone associé à la dernière tranche de quantité d'électricité produite, cette fonction dépendant de ladite production auxiliaire, et C(t) représente la valeur de la consommation électrique pour le compteur électrique en l'instant temporel respectif ;

ladite production auxiliaire étant de préférence déterminée à partir des valeurs acquises de consommation et de production correspondant à l'instant temporel respectif ; et

- l'ensemble d'instant(s) temporel(s) comporte un instant temporel courant et un ou plusieurs instants temporels postérieurs à l'instant temporel courant ;

chaque instant temporel postérieur étant de préférence inclus dans une plage temporelle comprise entre l'instant temporel courant et l'instant temporel courant plus une durée prédéfinie ;

la durée prédéfinie étant de préférence encore égale à 24 heures.

L'invention a également pour objet un programme d'ordinateur comportant des instructions logicielles qui, lorsqu'elles sont exécutées par un ordinateur, mettent en œuvre un procédé de gestion de l'affichage, tel que défini ci-dessus.

L'invention a également pour objet un dispositif électronique de gestion de l'affichage d'informations relatives à un compteur électrique connecté à un réseau électrique, le dispositif comprenant :

- un module d'acquisition configuré pour acquérir, de la part d'un gestionnaire du réseau électrique, des valeurs de consommation électrique et de production(s) électrique(s) sur le réseau électrique,
- un module de calcul configuré pour calculer une grandeur marginale de dioxyde de carbone émis pour chaque instant temporel d'un ensemble d'instant(s) temporel(s), chaque grandeur marginale étant calculée à partir des valeurs acquises de consommation et de production correspondant à l'instant temporel respectif et d'une modélisation d'un taux d'émission de dioxyde de carbone associé à une dernière tranche de quantité d'électricité produite pour le réseau électrique, ladite dernière tranche résultant d'une production(s) électrique(s) émettrice de dioxyde de carbone et distincte d'une production nucléaire, et
- un module de génération configuré pour générer des données d'affichage destinées à être affichées sur un écran d'affichage, les données d'affichage comportant chaque grandeur marginale calculée de dioxyde de carbone émis.

L'invention a également pour objet une installation électronique de transmission de données issues d'un compteur électrique connecté à un réseau électrique, l'installation de transmission comprenant :

- un système de communication adapté pour être connecté au compteur électrique et pour transmettre à un utilisateur des données issues du compteur électrique,
- un appareil électronique de pilotage du système de communication,
- un équipement électronique de supervision connecté, d'une part, au système de communication, et d'autre part, à l'appareil électronique de pilotage, via un réseau de communication, et
- un dispositif électronique de gestion de l'affichage d'informations relatives au compteur électrique, le dispositif électronique de gestion étant tel que défini ci-dessus.

Suivant un autre aspect avantageux de l'invention, l'installation de transmission comprend la caractéristique suivante :

- le système de communication est un système de communication ERL, le compteur électrique étant un compteur électrique Linky™ équipé d'une interface TIC via laquelle sont issues les données aptes à être transmises par le système de communication.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

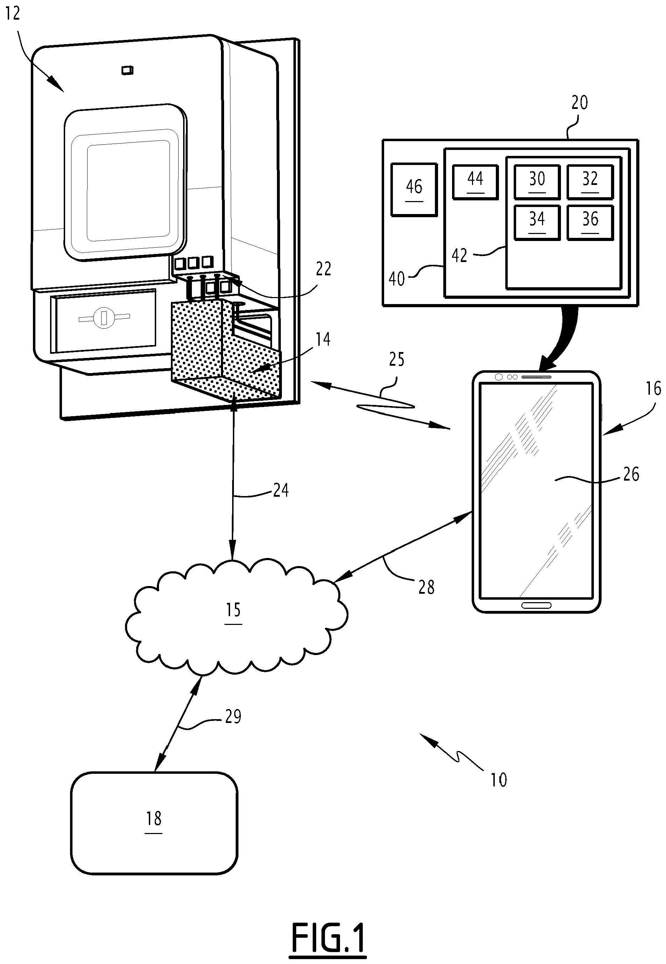

- la figure 1 est une vue schématique d'une installation électronique selon l'invention de transmission de données issues d'un compteur électrique connecté à un réseau électrique, l'installation de transmission comprenant un système de communication connecté au compteur électrique et apte à transmettre à un utilisateur des données issues du compteur électrique, un appareil électronique de pilotage du système de communication, un équipement électronique de supervision connecté, d'une part, au système de communication, et d'autre part, à l'appareil électronique de pilotage, via un réseau de communication ; et un dispositif électronique de gestion de l'affichage d'informations relatives au compteur électrique étant inclus dans l'appareil électronique de pilotage ou dans l'équipement électronique de supervision ;
- la figure 2 est une vue illustrant une régression effectuée pour modéliser un taux d'émission de dioxyde de carbone associé à une dernière tranche de quantité d'électricité produite pour le réseau électrique ;
- la figure 3 est un ensemble de vues schématiques de données d'affichage générées par le dispositif électronique de gestion de la figure 1 ; et
- la figure 4 est un organigramme d'un procédé, selon l'invention, de gestion de l'affichage d'informations relatives au compteur électrique, le procédé étant mis en œuvre par le dispositif électronique de gestion de la figure 1.

Sur la figure 1, une installation électronique 10 de transmission de données issues d'un compteur électrique 12 comprend un système de communication 14 adapté pour être connecté au compteur électrique 12 et pour transmettre à un utilisateur des données issues du compteur électrique 12 via un réseau de communication 15. Elle comprend en outre un appareil électronique 16 de pilotage du système de communication 14.

En complément facultatif, l'installation électronique de transmission 10 comprend un équipement électronique de supervision 18 connecté, d'une part, au système de communication 14, et d'autre part, à l'appareil électronique de pilotage 16, via le réseau de communication 15.

L'installation électronique de transmission 10 comprend en outre un dispositif électronique 20 de gestion de l'affichage d'informations relatives au compteur électrique 12. Le dispositif électronique de gestion 20 est de préférence inclus dans l'appareil électronique de pilotage 16 ou dans l'équipement électronique de supervision 18. Dans l'exemple de la figure 1, le dispositif électronique de gestion 20 est inclus dans l'appareil électronique de pilotage 16.

L'installation électronique de transmission 10 est alors configurée pour transmettre régulièrement à l'utilisateur des données issues du compteur électrique 12, telles que des données de consommation électrique, notamment afin d'aider l'utilisateur à gérer la consommation électrique globale associée à ce compteur électrique 12, ainsi que celle de différents équipements électriques alimentés par ce compteur électrique 12.

Le compteur électrique 12 est connu en soi, et est connecté à un réseau électrique, non représenté. Le compteur électrique 12 comporte de préférence une interface de connexion 22 pour la connexion du système de communication 14. Le compteur électrique 12 est typiquement un compteur électrique Linky™, de la société ENEDIS, et l'interface de connexion 22 est une interface TIC via laquelle sont issues les données aptes à être transmises ensuite par le système de communication 14.

Le système de communication 14 est typiquement un système de communication ERL, tel que la clé Atome commercialisée par la société TOTAL DIRECT ENERGIE.

Le système de communication 14 est connu en soi et comporte notamment un émetteur-récepteur, non représenté, apte à envoyer/recevoir des données avec le réseau de communication 15 via une première liaison de données 24, de préférence sans fil, et à envoyer/recevoir des données avec l'appareil de pilotage 16 via une deuxième liaison de données 25, de préférence sans fil. La première liaison de données 24 est par exemple conforme à la norme Wi-Fi, et la deuxième liaison de données 25 est une liaison de données à plus courte distance, par exemple conforme à la norme Bluetooth, en particulier la norme Bluetooth Low Energy, également notée BLE.

Le réseau de communication 15 est connu en soi, et est par exemple partiellement basé sur le réseau Internet.

L'appareil électronique de pilotage 16 est configuré pour piloter le système de communication 14. L'appareil de pilotage 16 est par exemple embarqué au sein d'un téléphone mobile ou ordiphone (de l'anglais *smartphone*), comportant un écran d'affichage 26, de préférence tactile, comme représenté sur la figure 1. En variante, L'appareil de pilotage 16 est embarqué au sein d'une tablette électronique comportant elle aussi l'écran d'affichage 26.

L'appareil de pilotage 16 est apte à communiquer avec le réseau de communication 15 via une troisième liaison de données 28, de préférence sans fil, telle qu'une liaison de données conforme à la norme Wi-Fi.

L'équipement de supervision 18 est par exemple un serveur informatique. L'équipement de supervision 18 est apte à communiquer avec le réseau de communication 15 via une quatrième liaison de données 29, par exemple filaire.

Le dispositif électronique de gestion 20 est configuré pour gérer l'affichage d'information relative au compteur électrique 12 connecté au réseau électrique.

Le dispositif électronique de gestion 20 comprend un module 30 d'acquisition de valeurs de consommation électrique $Cons(t)$ et de production(s) électrique(s) $Prod_{nucl}(t)$, $Prod_{non-em}(t)$ sur le réseau électrique, un module 32 de calcul d'au moins une grandeur marginale $G_{CO2\_marg}(t)$ de dioxyde de carbone émis pour chaque instant temporel t d'un ensemble d'instant(s) temporel(s), et un module 34 de génération de données d'affichage destinées à être affichées sur l'écran d'affichage 26, les données d'affichage comportant notamment chaque grandeur marginale calculée $G_{CO2\_marg}(t)$ de dioxyde de carbone émis.

En complément facultatif, notamment lorsque le dispositif électronique de gestion 20 est inclus dans l'appareil électronique de pilotage 16, le dispositif de gestion 20 comprend en outre un module 36 d'affichage, sur l'écran d'affichage 26, des données d'affichage générées par le module de génération 34.

Dans l'exemple de la figure 1, le dispositif électronique de pilotage 20 comprend une unité de traitement d'informations 40 formée par exemple d'une mémoire 42 et d'un processeur 44 associé à la mémoire 42. Dans cet exemple, le dispositif de gestion 20 comprend également un émetteur-récepteur 46 apte à envoyer/recevoir des données avec le système de communication 14 via la deuxième liaison de données 25.

En complément facultatif, le dispositif de gestion 20 est apte à communiquer avec le réseau de communication 15 via la troisième liaison de données 28.

Dans l'exemple de la figure 1, le module d'acquisition 30, le module de calcul 32 et le module de génération 34, ainsi qu'en complément facultatif le module d'affichage 36, sont réalisés chacun sous forme d'un logiciel ou d'une brique logicielle, exécutable par le processeur 44. La mémoire 42 du dispositif de gestion 20 est alors apte à stocker un logiciel d'acquisition des valeurs de consommation $Cons(t)$ et de production(s) électrique(s) $Prod_{nucl}(t)$, $Prod_{non-em}(t)$ sur le réseau électrique, un logiciel de calcul de la grandeur marginale $G_{CO2\_marg}(t)$ de dioxyde de carbone émis pour chaque instant temporel t de l'ensemble d'instant(s) temporel(s) et un logiciel de génération des données d'affichage destinées à être affichées sur l'écran d'affichage 26. En complément facultatif, la mémoire 42 du dispositif de gestion 20 est également apte à stocker un logiciel d'affichage, sur l'écran d'affichage 26, des données d'affichages générées par le logiciel de génération. Le processeur 44 est alors apte à exécuter chacun des logiciels parmi le logiciel d'acquisition, le logiciel de calcul et le logiciel de génération, ainsi qu'en complément facultatif le logiciel d'affichage.

En variante non représentée, le module d'acquisition 30, le module de calcul 32 et le module de génération 34, ainsi qu'en complément facultatif le module d'affichage 36, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif de gestion 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles.

La première liaison de données 24, entre le système de communication 14 et l'équipement de supervision 18, en particulier entre le système de communication 14 et le réseau de communication 15, est de préférence sécurisée. La première liaison de données 24 est par exemple conforme à la norme Wi-Fi avec une sécurisation de type WPA (de l'anglais *Wi-Fi Protected Access*), de préférence WPA2, de préférence encore WPA2 combiné à un protocole TLS (de l'anglais *Transport Layer Security*).

La troisième liaison de données 28, entre le dispositif de pilotage 16 et l'équipement de supervision 18, en particulier entre le dispositif de pilotage 16 et le réseau de communication 15, est de préférence sécurisée. La troisième liaison de données 28 est par exemple selon le protocole HTTPS (de l'anglais *HyperText Transfer Protocol Secure*), c'est-à-dire selon le protocole HTTP (de l'anglais *HyperText Transfer Protocol*) combiné avec un protocole de sécurité, tel que le protocole TLS ou le protocole SSL (de l'anglais *Secure Sockets Layer)*.

Le module d'acquisition 30 est configuré pour acquérir, par exemple de la part d'un gestionnaire du réseau électrique, des valeurs de consommation électrique $Cons(t)$ et de production(s) électrique(s) $Prod_{nucl}(t)$, $Prod_{non-em}(t)$ sur le réseau.

En complément facultatif, en particulier lorsque la grandeur marginale $G_{CO2\_marg}(t)$ calculée par le module de calcul 32 est une quantité marginale $Q_{CO2\_marg}(t)$ de dioxyde de carbone émis, le module d'acquisition 30 est configuré en outre pour acquérir une valeur de consommation électrique $C(t)$ pour le compteur électrique 12 en l'instant temporel t respectif, par exemple de la part du système de communication 14.

Le module de calcul 32 est configuré pour calculer au moins une grandeur marginale $G_{CO2\_marg}(t)$ de dioxyde de carbone émis pour chaque instant temporel t de l'ensemble d'instant(s) temporel(s), chaque grandeur marginale $G_{CO2\_marg}(t)$ étant calculée à partir des valeurs acquises de consommation $Cons(t)$ et de production(s) $Prod_{nucl}(t)$, $Prod_{non-em}(t)$ correspondant à l'instant temporel t respectif et d'une modélisation d'un taux d'émission de dioxyde de carbone associé à une dernière tranche de quantité d'électricité produite pour le réseau électrique.

La dernière tranche résulte typiquement d'une production électrique émettrice de dioxyde de carbone et distincte d'une production nucléaire $Prod_{nucl}(t)$. La dernière tranche résulte alors par exemple d'une production de centrale(s) à gaz et/ou d'une production de centrale(s) à fuel et/ou d'une production de centrale(s) à charbon.

La grandeur marginale calculée $G_{CO2\_marg}(t)$ est par exemple un taux marginal $R_{CO2\_marg}(t)$ de dioxyde de carbone émis, représentant un ratio d'une quantité de dioxyde de carbone émis par rapport à une consommation électrique. Le taux marginal de dioxyde de carbone émis est typiquement exprimé en g/kWh.

Le taux marginal de dioxyde de carbone émis vérifie, par exemple, l'équation suivante :

[Math 1]

$$R_{CO2\_marg}(t) = R_{CO2\_mod}(Prod_{aux}(t))$$

où $R_{CO2\_marg}(t)$ représente le taux marginal de dioxyde de carbone émis en l'instant temporel (t) respectif,
$Prod_{aux}(t)$ représente une production auxiliaire d'électricité sur le réseau en l'instant temporel (t) respectif, ladite production auxiliaire ($Prod_{aux}(t)$) étant émettrice de dioxyde de carbone et distincte d'une production nucléaire d'électricité sur le réseau, et
$R_{CO2\_mod}$ est une fonction résultant de la modélisation du taux d'émission de dioxyde de carbone associé à la dernière tranche de quantité d'électricité produite, cette fonction dépendant de ladite production auxiliaire ($Prod_{aux}(t)$).

La production auxiliaire ($Prod_{aux}(t)$) est de préférence déterminée à partir des valeurs acquises de consommation Cons(t) et de production $Prod_{nucl}(t)$, $Prod_{non-em}(t)$ correspondant à l'instant temporel (t) respectif.

En complément ou en variante, la grandeur marginale calculée $G_{CO2\_marg}(t)$ est une quantité marginale $Q_{CO2\_marg}(t)$ de dioxyde de carbone émis, et dépend alors typiquement d'une valeur de consommation électrique C(t) pour le compteur électrique 12 pour l'instant temporel t respectif, acquise le cas échéant par le module d'acquisition 30.

La quantité marginale $Q_{CO2\_marg}(t)$ de dioxyde de carbone émis vérifie, par exemple, l'équation suivante :

[Math 2]

$$Q_{CO2\_marg}(t) = R_{CO2\_mod}(Prod_{aux}(t)) \cdot C(t)$$

où $Q_{CO2\_marg}(t)$ représente la quantité marginale de dioxyde de carbone émis en l'instant temporel (t) respectif,
$Prod_{aux}(t)$ représente une production auxiliaire d'électricité sur le réseau en l'instant temporel (t) respectif, ladite production auxiliaire ($Prod_{aux}(t)$) étant émettrice de dioxyde de carbone et distincte d'une production nucléaire d'électricité sur le réseau,
$R_{CO2\_mod}$ est une fonction résultant de la modélisation du taux d'émission de dioxyde de carbone associé à la dernière tranche de quantité d'électricité produite, cette fonction dépendant de ladite production auxiliaire ($Prod_{aux}(t)$), et
C(t) représente la valeur de la consommation électrique pour le compteur électrique (12) en l'instant temporel (t) respectif.

De manière analogue au cas où la grandeur marginale $G_{CO2\_marg}(t)$ est le taux marginal $R_{CO2\_marg}(t)$ de dioxyde de carbone émis, la production auxiliaire ($Prod_{aux}(t)$) est de préférence déterminée à partir des valeurs acquises de consommation Cons(t) et de production $Prod_{nucl}(t)$, $Prod_{non-em}(t)$ correspondant à l'instant temporel (t) respectif.

L'ensemble d'instant(s) temporel(s) comporte au moins un instant temporel t.

Lorsque l'ensemble d'instant(s) temporel(s) comporte plusieurs instants temporels, il comporte de préférence un instant temporel courant $t_0$ et un ou plusieurs instants temporels $t_n$ postérieurs à l'instant temporel courant $t_0$.

Chaque instant temporel postérieur $t_n$ est de préférence inclus dans une plage temporelle comprise entre l'instant temporel courant $t_0$ et l'instant temporel courant $t_0$ plus une durée prédéfinie T. La durée prédéfinie T est, par exemple, égale à 24 heures.

Chaque instant temporel t correspond, par exemple, à une heure donnée, ou encore à une plage horaire donnée, de la journée. Autrement dit, selon cet exemple, la grandeur marginale $G_{CO2\_marg}(t)$ de dioxyde de carbone émis est calculée d'heure en heure. En d'autres termes, le pas d'échantillonnage est l'heure, d'un point de vue temporel, pour le calcul de la grandeur marginale $G_{CO2\_marg}(t)$ de dioxyde de carbone émis.

L'homme du métier comprendra bien entendu que d'autres valeurs de durées temporelles sont possibles en terme de pas d'échantillonnage temporel.

L'homme du métier comprendra également que lorsque chaque instant temporel t correspond à une heure donnée, l'ensemble d'instant(s) temporel(s) comporte de préférence 24 instants temporels si la durée prédéfinie T est égale à 24 heures, à savoir l'instant temporel courant $t_0$, ainsi que les instants temporels $t_1$, ... $t_{23}$ correspondant aux 23 prochaines heures de la période de 24 heures à venir, à partir de l'instant temporel courant $t_0$.

La fonction $R_{CO2\_mod}$ résultant de la modélisation du taux d'émission de dioxyde de carbone associé à la dernière tranche de quantité d'électricité produite est, par exemple, déterminée à partir d'un historique, au cours d'une période passée, des valeurs de consommation électrique Cons(t) et de production(s) électrique(s) $Prod_{nucl}(t)$, $Prod_{non-em}(t)$ sur le réseau électrique, ainsi que des valeurs d'émission de dioxyde de carbone pour le territoire correspondant audit réseau électrique.

Le réseau électrique est par exemple le réseau électrique national, et les valeurs d'émissions de dioxyde de carbone prises en compte sont alors celles pour le territoire national associé audit réseau électrique national. La période passée est, par exemple, les 12 derniers mois précédent le moment où la modélisation est effectuée.

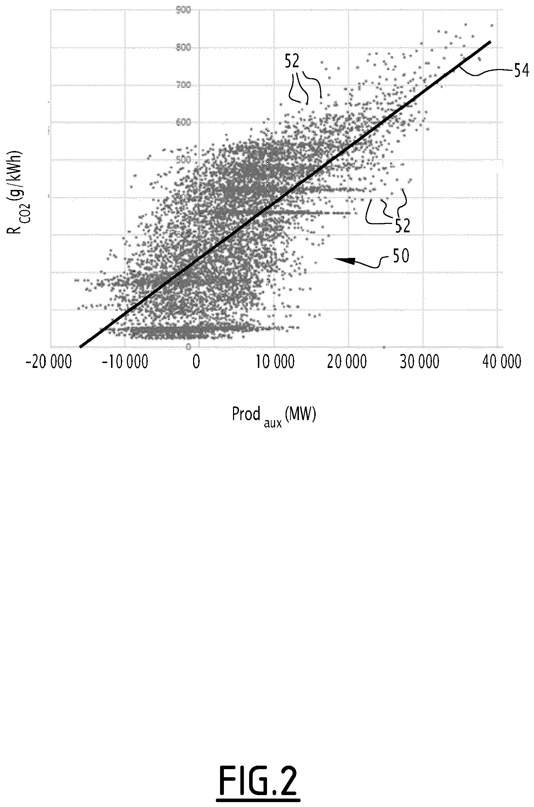

Cette historique des valeurs de consommation Cons(t) et de production(s) $Prod_{nucl}(t)$, $Prod_{non-em}(t)$ électriques, d'une part, et d'émission de dioxyde de carbone, d'autre part, pour chaque instant temporel respectif au cours de la période passée permet alors d'obtenir un nuage 50 de points 52 où chaque point 52 correspond, en un instant temporel t donné, à un taux d'émission de dioxyde de carbone pour la plage temporelle correspondant audit instant temporel t en fonction de la production auxiliaire $Prod_{aux}(t)$ d'électricité sur le réseau en ledit instant temporel t. Un exemple d'un tel nuage 50 est représenté à la figure 2 où chaque point 52 correspond à un taux d'émission $R_{CO2}$ pour une production auxiliaire $Prod_{aux}$ donnée en un instant temporel t respectif au cours de la période passée. Sur la figure 2, la production auxiliaire $Prod_{aux}$ est exprimée en MW et indiquée en abscisse, le taux d'émission $R_{CO2}$ étant exprimé en g/kWh et indiqué en ordonnée.

L'homme du métier comprendra que l'instant temporel t pris en compte pour la détermination de la fonction de modélisation $R_{CO2\_mod}$ est de préférence le même que celui utilisé pour le calcul de la grandeur marginale $G_{CO2\_marg}(t)$. Autrement dit, selon l'exemple précédent où la grandeur marginale $G_{CO2\_marg}(t)$ est calculée pour chaque heure, chaque point 52 du nuage 50 correspond de préférence à une heure donnée au cours de la période passée.

La fonction de modélisation $R_{CO2\_mod}$ est alors typiquement obtenue via une régression effectuée à partir du nuage de points 50.

La régression est, par exemple, une régression linéaire, comme sur la figure 2 où la fonction de modélisation $R_{CO2\_mod}$ est alors une fonction affine représentée par la droite 54.

Lorsque la régression effectuée pour obtenir la fonction de modélisation $R_{CO2\_mod}$ est une régression linéaire, la fonction de modélisation vérifie alors par exemple l'équation suivante :

[Math 3]

$$R_{CO2_{mod}}(Prod_{aux}(t)) = A \cdot Prod_{aux}(t)) + B$$

où $R_{CO2\_mod}$ représente la fonction de modélisation du taux d'émission de dioxyde de carbone associé à la dernière tranche de quantité d'électricité produite,

$Prod_{aux}(t)$ représente une production auxiliaire d'électricité sur le réseau, ladite production auxiliaire $(Prod_{aux}(t))$ étant émettrice de dioxyde de carbone et distincte d'une production nucléaire d'électricité sur le réseau, et
A et B sont des coefficients.

En variante, la régression est une régression polynomiale avec un polynôme d'ordre supérieur ou égale à 2.

La production auxiliaire $Prod_{aux}(t)$ est une production électrique émettrice de dioxyde de carbone et distincte d'une production nucléaire $Prod_{nucl}(t)$ d'électricité sur le réseau.

La production auxiliaire $Prod_{aux}(t)$ vérifie alors par exemple l'équation suivante :

[Math 4]

$$Prod_{aux}(t) = \text{Cons}(t) - Prod_{nucl}(t) - Prod_{non-em}(t)$$

où $Prod_{aux}(t)$ représente ladite production auxiliaire d'électricité sur le réseau en l'instant temporel (t) respectif,

Cons(t) représente la consommation globale sur le réseau électrique en l'instant temporel (t) respectif,
$Prod_{nucl}(t)$ représente la production nucléaire d'électricité sur le réseau en l'instant temporel (t) respectif, et
$Prod_{non-em}(t)$ représente la production d'électricité sur le réseau en l'instant temporel (t) respectif qui n'est pas émettrice de dioxyde de carbone, dite production non-émettrice de dioxyde de carbone.

La production non-émettrice de dioxyde de carbone $Prod_{non-em}(t)$ inclut, par exemple, une production éolienne et une production photovoltaïque d'électricité sur le réseau en l'instant temporel (t) respectif.

Le module de génération 34 est configuré pour générer les données d'affichages destinées à être affichées sur l'écran d'affichage 26. Les données d'affichages comportent de préférence chaque grandeur marginale calculée

$G_{CO2\_marg}(t)$.

Les données d'affichage comportent par exemple le taux marginal $R_{CO2\_marg}(t_0)$ de dioxyde de carbone émis en l'instant temporel courant $t_0$, et/ou les taux marginaux $R_{CO2\_marg}(t_n)$ de dioxyde de carbone émis en plusieurs instants temporels $t_n$ postérieurs et/ou des quantités marginales $Q_{CO2\_marg}(t_i)$ de dioxyde de carbone émis en différents instants temporels $t_i$ successifs, ces quantités marginales étant en outre en complément facultatif cumulées sur une période temporelle donnée, telle qu'une période de 24 heures, de 7 jours, de 30 jours, ou encore de 12 mois.

Le module d'affichage 36 est alors configuré pour afficher, sur l'écran d'affichage 26, les données d'affichages générées par le module de génération 34.

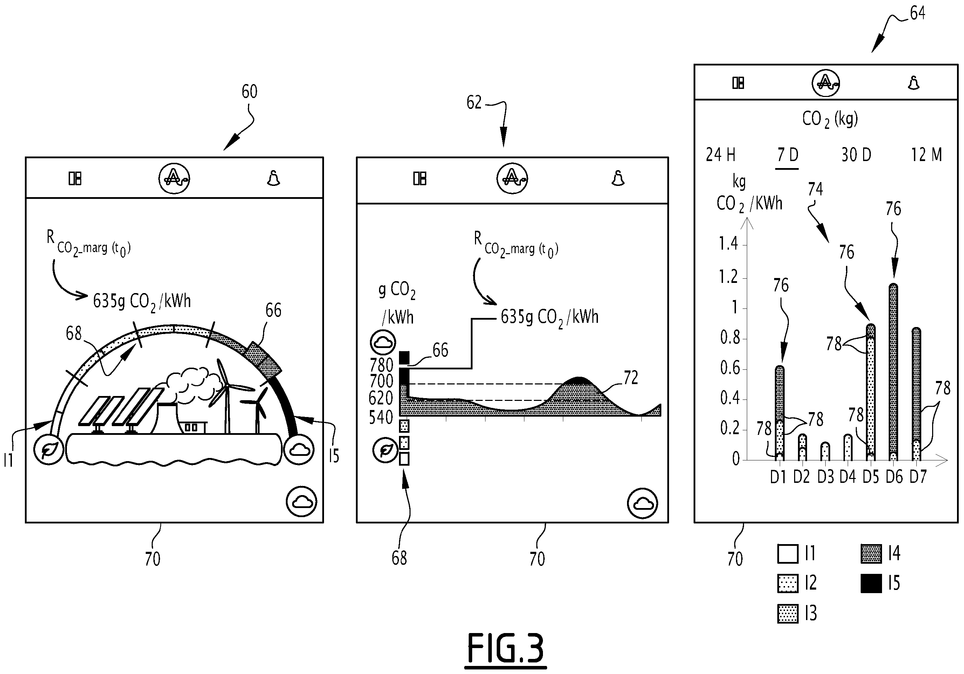

A titre d'exemple, sur la figure 3 sont illustrées plusieurs vues schématiques 60, 62, 64 destinées à être affichées par le module d'affichage 36 sur l'écran d'affichage 26, à savoir une première vue 60, une deuxième vue 62 et une troisième vue 64.

La première vue 60 représente essentiellement le taux marginal $R_{CO2\_marg}(t_0)$ de dioxyde de carbone émis en l'instant temporel courant $t_0$, également appelé taux marginal courant, qui est affiché à la fois sous forme d'une valeur numérique, par exemple exprimée en g/kWh, et également sous forme d'un curseur 66 le long d'une échelle 68 d'impact environnemental. L'échelle 68 d'impact environnemental va d'un impact faible, également appelé Impact_1, et noté I1, à un impact élevé, également appelé Impact_5, et noté I5. Dans l'exemple de la figure 3, l'échelle 68 est en forme d'un demi-cercle sur la première vue 60, et la valeur du taux marginal courant $R_{CO2\_marg}(t_0)$ est représentée sous forme d'un curseur 66 coloré se déplaçant le long de cette échelle 68, la couleur du curseur 66 dépendant de l'impact associé à ce taux marginal courant $R_{CO2\_marg}(t_0)$.

La première vue 60 comporte également une zone 70 d'affichage d'un message textuel visant à expliquer la situation à l'utilisateur, notamment en termes d'impact environnemental, et à lui préconiser une suggestion éventuelle d'action sur sa consommation électrique C.

La deuxième vue 62 est une vue représentant, d'une part, le taux marginal courant $R_{CO2\_marg}(t_0)$, par exemple sous forme de la valeur numérique et également sous forme du curseur 66 le long de l'échelle 68, l'échelle 68 étant verticale dans l'exemple de cette deuxième vue 62, et d'autre part, une évolution prévisionnelle du taux marginal du dioxyde de carbone émis au cours d'une période temporelle à venir, de préférence de durée égale à la durée prédéfinie T.

L'évolution du taux marginal $R_{CO2\_marg}$ de dioxyde de carbone émis au cours de ladite période temporelle à venir est par exemple représentée sous forme d'une courbe 72, visible sur la deuxième vue 62. Cette courbe 72 est typiquement obtenue via une interpolation à partir des différentes valeurs du taux marginal $R_{CO2\_marg}(t_n)$ de dioxyde de carbone émis en les instants temporels $t_n$ postérieurs à l'instant temporel courant $t_0$.

La troisième vue 64 représente des quantités marginales $Q_{CO2\_marg}(t_i)$ de dioxyde de carbone émis au cours d'une période temporelle donnée. Dans l'exemple de la figure 3, la troisième vue 64 représente la quantité marginale de dioxyde de carbone émis au cours des 7 derniers jours, la notation « 7 D » étant soulignée afin d'indiquer que la période prise en compte est celle des 7 derniers jours. Les autres périodes proposées à l'utilisateur sont une période correspondant aux 24 dernières heures, indiquée par la dénomination « 24 H » ; ainsi qu'une période des 30 derniers jours ; indiquée par la dénomination « 30 D » ; ainsi encore qu'une période des 12 derniers mois, indiquée par la dénomination « 12 M ».

Dans l'exemple de la figure 3, où la période affichée est celle des 7 derniers jours, la quantité marginale $Q_{CO2\_marg}$ de dioxyde de carbone émis est alors représentée pour chacun des jours parmi les 7 derniers jours, sous forme d'un histogramme 74 avec une colonne 76, ou barre, pour chaque jour. Chaque jour est indiqué par une notation Di où i est un indice entier de valeur comprise entre 1 et 7, la notation D1 correspondant au premier jour et la notation D7 correspondant au septième et dernier jour, c'est-à-dire le plus récent, de cette période des 7 derniers jours.

En complément, chaque colonne 76 représentant la quantité marginale $Q_{CO2\_marg}$ de dioxyde de carbone émis pour chaque jour Di est décomposée en plusieurs parties 78, chaque partie 78 étant associée à un impact environnemental Ii donné parmi les impacts environnementaux prédéfinis I1 à I5. Cette représentation sous forme d'histogramme 74 de la quantité marginale $Q_{CO2\_marg}$ de dioxyde de carbone émis avec en outre la répartition de l'émission de dioxyde de carbone par niveaux d'impact I1 à I5 au cours de chaque jour Di permet alors à l'utilisateur de mieux appréhender l'impact sur l'environnement qu'a eu sa consommation électrique C au cours de chaque jour Di au cours de la période temporelle considérée.

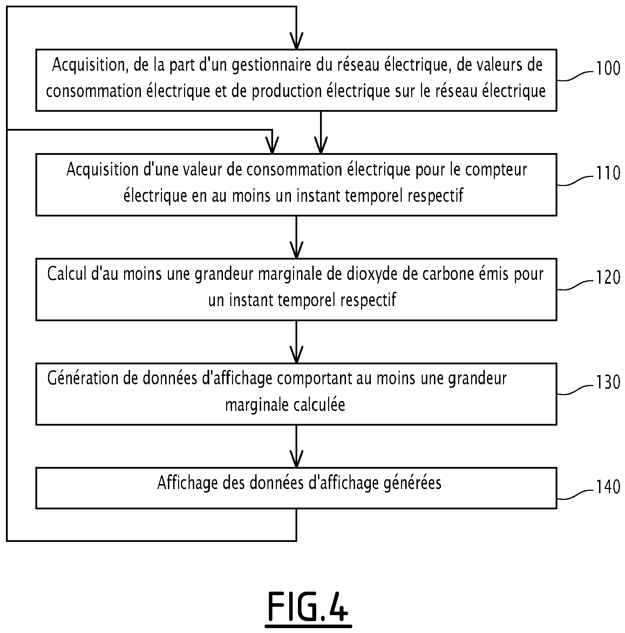

Le fonctionnement du dispositif de gestion 20 selon l'invention va désormais être expliqué en regard de la figure 4 représentant un organigramme du procédé de gestion de l'affichage d'information relative au compteur électrique 12 connecté au réseau électrique.

Lors d'une étape initiale 100, le dispositif de gestion 20 acquiert, via son module d'acquisition 30, les valeurs de consommation électrique Cons(t) et de production(s) électrique(s) $Prod_{nucl}(t)$, $Prod_{non-em}(t)$ sur le réseau électrique, lesdites valeurs étant par exemple reçues de la part du gestionnaire du réseau électrique.

Lors d'une étape optionnelle 110 suivante, le dispositif de gestion 20 acquiert, via son module d'acquisition 30, la valeur de la consommation électrique C(t) pour le compteur électrique 12 pour l'instant temporel t respectif, en particulier lorsque la grandeur marginale calculée $G_{CO2\_marg}(t)$ est la quantité marginale $Q_{CO2\_marg}(t)$ de dioxyde de carbone émis.

Le dispositif de gestion 20 passe ensuite à l'étape suivante 120 lors de laquelle il calcule, via son module de calcul 32, au moins une grandeur marginale $G_{CO2\_marg}(t)$ de dioxyde de carbone émis pour un instant temporel t respectif de l'ensemble d'instant(s) temporel(s), de préférence pour chaque instant temporel t dudit ensemble. La grandeur marginale calculée $G_{CO2\_marg}(t)$ est par exemple le taux marginal $R_{CO2\_marg}(t)$ de dioxyde de carbone émis, calculé typiquement suivant l'équation (1) précédente.

En complément ou en variante, la grandeur marginale $G_{CO2\_marg}(t)$ calculée en l'instant temporel t respectif est la quantité marginale $Q_{CO2\_marg}(t)$ de dioxyde de carbone émis en ledit instant temporel t. Ladite quantité marginale $Q_{CO2\_marg}(t)$ est typiquement calculée suivant l'équation (2) précédente.

Les valeurs de consommation Cons(t) et de production(s) $Prod_{nucl}(t)$, $Prod_{non-em}(t)$ électriques acquises lors de l'étape initiale 100 servent typiquement à déterminer la production auxiliaire $Prod_{aux}(t)$ sur le réseau en l'instant temporel t respectif, par exemple suivant l'équation (4) précédente, ladite production auxiliaire $Prod_{aux}(t)$ étant alors utilisée selon l'équation (1) ou (2), pour déterminer le taux marginal de dioxyde de carbone émis $R_{CO2\_marg}(t)$ et/ou la quantité marginale de dioxyde de carbone émis $Q_{CO2\_marg}(t)$.

A l'issue de l'étape de calcul 120, le dispositif de gestion 20 génère, lors de l'étape 130 et via son module de génération 34, les données d'affichage destinées à être affichées sur l'écran d'affichage 26, lesdites données d'affichage comportant au moins une grandeur marginale calculée $G_{CO2\_marg}(t)$, et de préférence chaque grandeur marginale calculée $G_{CO2\_marg}(t)$.

Le dispositif de gestion 20 passe enfin à l'étape 140 lors de laquelle il affiche, via son module d'affichage 36 et sur l'écran d'affichage 26, les données d'affichage générées préalablement lors de l'étape 130.

A l'issue de l'étape d'affichage 140, le dispositif de gestion 20 retourne à l'étape d'acquisition 100, ou bien à l'étape d'acquisition 110, pour acquérir de nouvelles valeurs de consommation Cons(t) et/ou de production(s) électrique(s) $Prod_{nucl}(t)$, $Prod_{non-em}(t)$ sur le réseau, ou bien une nouvelle valeur de consommation électrique C(t) pour le compteur électrique 12 en un nouvel instant temporel.

On conçoit ainsi que le procédé et le dispositif électronique de gestion 20 selon l'invention permet de fournir davantage d'informations à l'utilisateur, et de l'aider alors à mieux gérer sa consommation électrique, notamment à mieux évaluer l'impact environnemental de sa consommation électrique C, afin de lui permettre ensuite de réduire, s'il le souhaite, l'impact environnemental de celle-ci.

En effet, la grandeur marginale de dioxyde de carbone émis $G_{CO2\_marg}(t)$, calculée et destinée à être affichée par le dispositif de gestion 20 selon l'invention, permet à l'utilisateur d'évaluer si, à l'instant temporel t correspondant à ladite grandeur marginale $G_{CO2\_marg}(t)$, une consommation électrique C(t) pour le compteur électrique 12 de son installation engendrera une émission marginale importante, ou au contraire faible, de dioxyde de carbone, et l'utilisateur peut alors adapter sa consommation électrique C(t) en fonction de ladite grandeur marginale calculée $G_{CO2\_marg}(t)$.

**Revendications**

1. Procédé de gestion de l'affichage d'informations relatives à un compteur électrique (12) connecté à un réseau électrique, le procédé étant mis en oeuvre par un dispositif électronique de gestion (20) et comprenant les étapes suivantes :

   - acquisition (100), de la part d'un gestionnaire du réseau électrique, de valeurs de consommation électrique (Cons(t)) et de production(s) électrique(s) ($Prod_{nucl}(t)$, $Prod_{non-em}(t)$) sur le réseau électrique,
   - calcul (120) d'une grandeur marginale de dioxyde de carbone émis ($G_{CO2\_marg}(t)$) pour chaque instant temporel (t) d'un ensemble d'instant(s) temporel(s), chaque grandeur marginale ($G_{CO2\_marg}(t)$) étant calculée à partir des valeurs acquises de consommation (Cons(t)) et de production ($Prod_{nucl}(t)$, $Prod_{non-em}(t)$) correspondant à l'instant temporel (t) respectif et d'une modélisation d'un taux d'émission de dioxyde de carbone associé à une dernière tranche de quantité d'électricité produite pour le réseau électrique, ladite dernière tranche résultant d'une production(s) électrique(s) émettrice de dioxyde de carbone et distincte d'une production nucléaire,
   - génération (130) de données d'affichage destinées à être affichées sur un écran d'affichage (26), les données d'affichage comportant chaque grandeur marginale calculée de dioxyde de carbone émis ($G_{CO2\_marg}(t)$).

2. Procédé selon la revendication 1, dans lequel la grandeur marginale calculée ($G_{CO2\_marg}(t)$) est un taux marginal de dioxyde de carbone émis ($R_{CO2\_marg}(t)$), représentant un ratio d'une quantité de dioxyde de carbone émis par rapport à une consommation électrique ;
   le taux marginal de dioxyde de carbone émis ($R_{CO2\_marg}(t)$) étant de préférence exprimé en g/kWh.

3. Procédé selon la revendication 2, dans lequel le taux marginal de dioxyde de carbone émis ($R_{CO2\_marg}(t)$) vérifie l'équation suivante :

$$R_{CO2\_marg}(t) = R_{CO2\_mod}(Prod_{aux}(t))$$

où $R_{CO2\_marg}(t)$ représente le taux marginal de dioxyde de carbone émis en l'instant temporel (t) respectif, $Prod_{aux}(t)$ représente une production auxiliaire d'électricité sur le réseau ($Prod_{aux}(t)$) en l'instant temporel (t) respectif, ladite production auxiliaire ($Prod_{aux}(t)$) étant émettrice de dioxyde de carbone et distincte d'une production nucléaire d'électricité sur le réseau ($Prod_{nucl}(t)$), et
$R_{CO2\_mod}$ est une fonction résultant de la modélisation du taux d'émission de dioxyde de carbone associé à la dernière tranche de quantité d'électricité produite, cette fonction dépendant de ladite production auxiliaire ($Prod_{aux}(t)$) ;
ladite production auxiliaire ($Prod_{aux}(t)$) étant de préférence déterminée à partir des valeurs acquises de consommation ($Cons(t)$) et de production ($Prod_{nucl}(t)$, $Prod_{non-em}(t)$) correspondant à l'instant temporel (t) respectif.

4. Procédé selon l'une quelconque des revendications précédentes, dans lequel la grandeur marginale calculée ($G_{CO2\_marg}(t)$) est une quantité marginale de dioxyde de carbone émis ($Q_{CO2\_marg}(t)$), et
le procédé comprend en outre l'acquisition (110) d'une valeur de consommation électrique (C(t)) pour le compteur électrique (12) en l'instant temporel (t) respectif ;
la valeur de consommation électrique (C(t)) étant de préférence acquise de la part d'un système de communication (14) connecté au compteur électrique (12).

5. Procédé selon la revendication 4, dans lequel la quantité marginale de dioxyde de carbone émis ($Q_{CO2\_marg}(t)$) vérifie l'équation suivante :

$$Q_{CO2\_marg}(t) = R_{CO2\_mod}(Prod_{aux}(t)) \cdot C(t)$$

où $Q_{CO2\_marg}(t)$ représente la quantité marginale de dioxyde de carbone émis en l'instant temporel (t) respectif, $Prod_{aux}(t)$ représente une production auxiliaire d'électricité sur le réseau ($Prod_{aux}(t)$) en l'instant temporel (t) respectif, ladite production auxiliaire ($Prod_{aux}(t)$) étant émettrice de dioxyde de carbone et distincte d'une production nucléaire d'électricité sur le réseau ($Prod_{nucl}(t)$),
$R_{CO2\_mod}$ est une fonction résultant de la modélisation du taux d'émission de dioxyde de carbone associé à la dernière tranche de quantité d'électricité produite, cette fonction dépendant de ladite production auxiliaire ($Prod_{aux}(t)$), et
C(t) représente la valeur de la consommation électrique pour le compteur électrique (12) en l'instant temporel (t) respectif ;
ladite production auxiliaire ($Prod_{aux}(t)$) étant de préférence déterminée à partir des valeurs acquises de consommation ($Cons(t)$) et de production ($Prod_{nucl}(t)$, $Prod_{non-em}(t)$) correspondant à l'instant temporel (t) respectif.

6. Procédé selon l'une quelconque des revendications précédentes, dans lequel l'ensemble d'instant(s) temporel(s) comporte un instant temporel courant ($t_0$) et un ou plusieurs instants temporels ($t_n$) postérieurs à l'instant temporel courant ($t_0$) ;
chaque instant temporel postérieur ($t_n$) étant de préférence inclus dans une plage temporelle comprise entre l'instant temporel courant ($t_0$) et l'instant temporel courant ($t_0$) plus une durée prédéfinie (T) ;
la durée prédéfinie (T) étant de préférence encore égale à 24 heures.

7. Programme d'ordinateur comportant des instructions logicielles qui, lorsqu'elles sont exécutées par un ordinateur, mettent en œuvre un procédé selon l'une quelconque des revendications précédentes.

8. Dispositif électronique (20) de gestion de l'affichage d'informations relatives à un compteur électrique (12) connecté à un réseau électrique, le dispositif (20) comprenant :

- un module d'acquisition (30) configuré pour acquérir, de la part d'un gestionnaire du réseau électrique, des valeurs de consommation électrique ($Cons(t)$) et de production(s) électrique(s) ($Prod_{nucl}(t)$, $Prod_{non-em}(t)$) sur le réseau électrique,
- un module de calcul (32) configuré pour calculer une grandeur marginale de dioxyde de carbone émis ($G_{CO2\_marg}(t)$) pour chaque instant temporel (t) d'un ensemble d'instant(s) temporel(s), chaque grandeur marginale ($G_{CO2\_marg}(t)$) étant calculée à partir des valeurs acquises de consommation (Cons(t)) et de production ($Prod_{nucl}(t)$, $Prod_{non-em}(t)$) correspondant à l'instant temporel (t) respectif et d'une modélisation d'un taux d'émission de dioxyde de carbone associé à une dernière tranche de quantité d'électricité produite pour le réseau électrique, ladite dernière tranche résultant d'une production(s) électrique(s) émettrice de dioxyde de carbone et distincte d'une production nucléaire,
- un module de génération (34) configuré pour générer des données d'affichage destinées à être affichées sur un écran d'affichage (26), les données d'affichage comportant chaque grandeur marginale calculée de dioxyde de carbone émis ($G_{CO2\_marg}(t)$).

9. Installation électronique (10) de transmission de données issues d'un compteur électrique (12) connecté à un réseau électrique, l'installation de transmission (10) comprenant :

- un système de communication (14) adapté pour être connecté au compteur électrique (12) et pour transmettre à un utilisateur des données issues du compteur électrique (12),
- un appareil électronique (16) de pilotage du système de communication (14),
- un équipement électronique de supervision (18) connecté, d'une part, au système de communication (14), et d'autre part, à l'appareil électronique de pilotage (16), via un réseau de communication (15), et
- un dispositif électronique (20) de gestion de l'affichage d'informations relatives au compteur électrique (12), **caractérisée en ce que** le dispositif électronique de gestion (20) est selon la revendication précédente.

10. Installation (10) selon la revendication 9, dans laquelle le système de communication (14) est un système de communication ERL, le compteur électrique (12) étant un compteur électrique Linky™ équipé d'une interface TIC via laquelle sont issues les données aptes à être transmises par le système de communication (14).

## FIG.1

FIG.2

FIG.3

Screen 60:

$R_{CO_2\_marg}(t_0)$

635g $CO_2$/kWh

68, 66, I1, I5

Screen 62:

$R_{CO_2\_marg}(t_0)$

g $CO_2$/kWh

635g $CO_2$/kWh

66, 72, 68

780
700
620
540

Screen 64:

$CO_2$ (kg)

24 H    7 D    30 D    12 M

kg $CO_2$/KWh

74, 76, 78

1.4
1.2
1
0.8
0.6
0.4
0.2
0

D1 D2 D3 D4 D5 D6 D7

I1   I4
I2   I5
I3

70

EP 3 836 048 A1

Acquisition, de la part d'un gestionnaire du réseau électrique, de valeurs de consommation électrique et de production électrique sur le réseau électrique — 100

Acquisition d'une valeur de consommation électrique pour le compteur électrique en au moins un instant temporel respectif — 110

Calcul d'au moins une grandeur marginale de dioxyde de carbone émis pour un instant temporel respectif — 120

Génération de données d'affichage comportant au moins une grandeur marginale calculée — 130

Affichage des données d'affichage générées — 140

## FIG.4

**Europäisches Patentamt**
**European Patent Office**
**Office européen des brevets**

# RAPPORT DE RECHERCHE EUROPEENNE

Numéro de la demande

EP 20 21 2498

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/013123 A1 (OZAKI DAIJIRO [JP]) 10 janvier 2013 (2013-01-10) * abrégé * * alinéas [0005] - [0021] * * alinéas [0054] - [0064] * * alinéas [0086] - [0121]; figure 2 * ----- | 1-10 | INV. G06Q10/04 G06Q50/06 |
| X | EP 2 418 549 A2 (SONY CORP [JP]) 15 février 2012 (2012-02-15) * abrégé * * alinéas [0005] - [0009] * * alinéas [0014] - [0028]; figures 1,2 * * alinéas [0034] - [0042] * ----- | 1-10 | |
| A | EP 3 291 165 A1 (UNIV TSINGHUA [CN]) 7 mars 2018 (2018-03-07) * abrégé * * alinéa [0005] * * alinéas [0033] - [0038]; figure 1 * ----- | 1-10 | |
| A | KR 2011 0131537 A (KEPCO KDN CO LTD [KR]) 7 décembre 2011 (2011-12-07) * abrégé * * alinéas [0001] - [0018] * ----- | 1-10 | **DOMAINES TECHNIQUES RECHERCHES (IPC)** G06Q |

Le présent rapport a été établi pour toutes les revendications

| Lieu de la recherche | Date d'achèvement de la recherche | Examinateur |
|---|---|---|
| Munich | 22 mars 2021 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
### RELATIF A LA DEMANDE DE BREVET EUROPEEN NO.

EP 20 21 2498

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-03-2021

| Document brevet cité au rapport de recherche | Date de publication | Membre(s) de la famille de brevet(s) | Date de publication |
|---|---|---|---|
| US 2013013123 A1 | 10-01-2013 | CN 102844963 A<br>EP 2595280 A1<br>JP 5592182 B2<br>JP 2012023872 A<br>US 2013013123 A1<br>WO 2012008392 A1 | 26-12-2012<br>22-05-2013<br>17-09-2014<br>02-02-2012<br>10-01-2013<br>19-01-2012 |
| EP 2418549 A2 | 15-02-2012 | CN 102375999 A<br>EP 2418549 A2<br>JP 5707775 B2<br>JP 2012038234 A<br>KR 20120015268 A<br>US 2012042356 A1 | 14-03-2012<br>15-02-2012<br>30-04-2015<br>23-02-2012<br>21-02-2012<br>16-02-2012 |
| EP 3291165 A1 | 07-03-2018 | CN 106251095 A<br>EP 3291165 A1<br>US 2018067089 A1 | 21-12-2016<br>07-03-2018<br>08-03-2018 |
| KR 20110131537 A | 07-12-2011 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3058006 B1